# EUROPEAN PATENT APPLICATION

(11) **EP 4 564 493 A1**
(43) Date of publication of application: **04.06.2025**
(21) Application number: 23846008.3
(22) Date of filing: 01.06.2023
(51) Int. Cl.: H01M 10/04, H01M 10/0587, H01M 50/533

(54) **SECONDARY BATTERY**

(30) Priority: 27.07.2022 JP 2022119223
(71) Applicant: Panasonic Energy Co., Ltd., Osaka 570-8511 (JP)
(72) Inventor: UEDA, Tomomichi, Kadoma-shi, Osaka 571-0057 (JP)
(74) Representative: Eisenführ Speiser
(86) International application number: PCT/JP2023/020510
(87) International publication number: WO 2024/024271

(57) **Abstract**

A secondary battery includes a wound-type electrode group 20 configured of a first electrode 21 and a second electrode 25 wound with a separator 29 therebetween, each of which has a sheet shape that is long in a first directional D1. The first electrode 21 includes a first current collector 22 having sheet shape that is long in the first directional D1. The first current collector 22 includes a first exposed portion 23 located at one end thereof in a second direction D2 perpendicular to the first direction D1. The secondary battery further includes a first current collecting member connected to the first exposed portion 23 to be conductive to the first current collector 22. A plurality of first slits 23a are formed in an area of the first exposed portion 23 located between the opposite ends thereof in the second directional D2. The first slits 23a are not formed at the opposite ends of the first exposed portion 23 in the second directional D2. Accordingly, stress at the joint generated during charging and discharging can be reduced.

## Description

### [Technical Field]

The present disclosure relates to a secondary battery.

### [Background Art]

Conventionally, a secondary battery including a wound-type electrode group is known (e.g., Patent Literature 1). The electrode group of the secondary battery of Patent Literature 1 is configured by winding a strip-shaped positive electrode plate and a strip-shaped negative electrode plate with a separator therebetween, and each electrode plate has a plurality of lead pieces. The lead pieces included in the positive electrode plate are integrated by welding with an upper lid which also serves as a positive electrode external terminal.

### [Citation List]

### [Patent Literature]

Patent Literature 1: Japanese Laid-Open Patent Publication No. H11-238500

### [Summary of the invention]

### [Technical Problem]

However, electrode groups of secondary batteries expand and contract during charging and discharging. For example, in the secondary battery of Patent Literature 1, when the electrode group expands and contracts, stress is applied to the weld joint between the lead pieces and the upper lid. When the stress is excessive or when the stress is repeatedly applied, the weld joint may break. In view of such a situation, one object of the present disclosure is to reduce the stress on the joint during charging and discharging.

### [Solution to Problem]

One aspect of the present disclosure relates to a secondary battery. The secondary battery includes an electrode group of wound type configured of a first electrode and a second electrode wound with a separator therebetween, each of the first electrode and the second electrode having a sheet shape that is long in a first direction, wherein the first electrode includes a first current collector having a sheet shape that is long in the first direction, the first current collector includes a first exposed portion located at one end thereof in a second direction perpendicular to the first direction, the secondary battery further includes a first current collecting member connected to the first exposed portion to be conductive to the first current collector, a plurality of first slits are formed in an area of the first exposed portion located between opposite ends thereof in the second direction, and the first slits are not formed at the opposite ends of the first exposed portion in the second direction.

### [Advantageous Effect of Invention]

According to the present disclosure, stress on the joint during charging and discharging can be reduced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1]

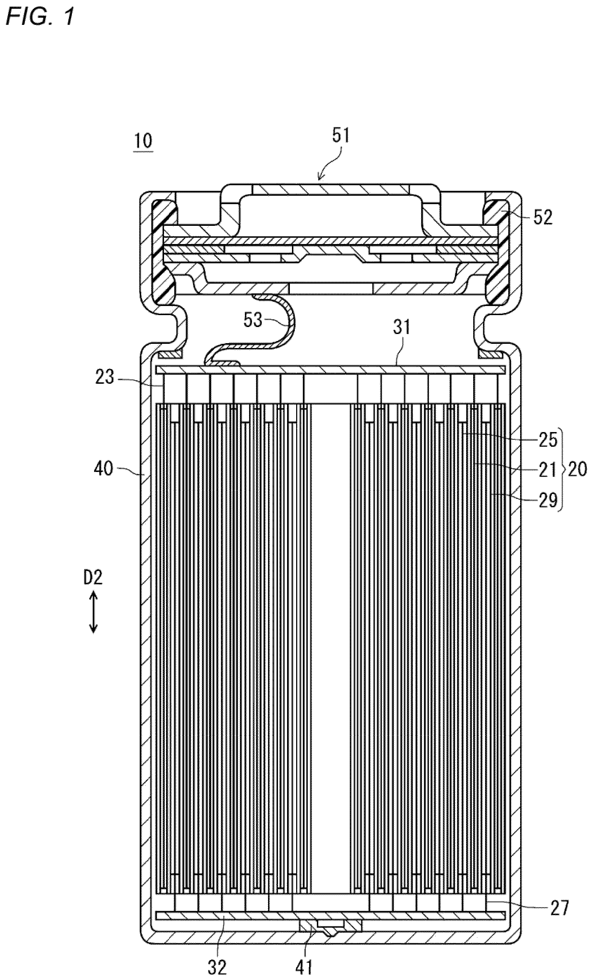

   FIG. 1 is a longitudinal sectional view of the configuration of a secondary battery according to a first embodiment.
[FIG. 2]

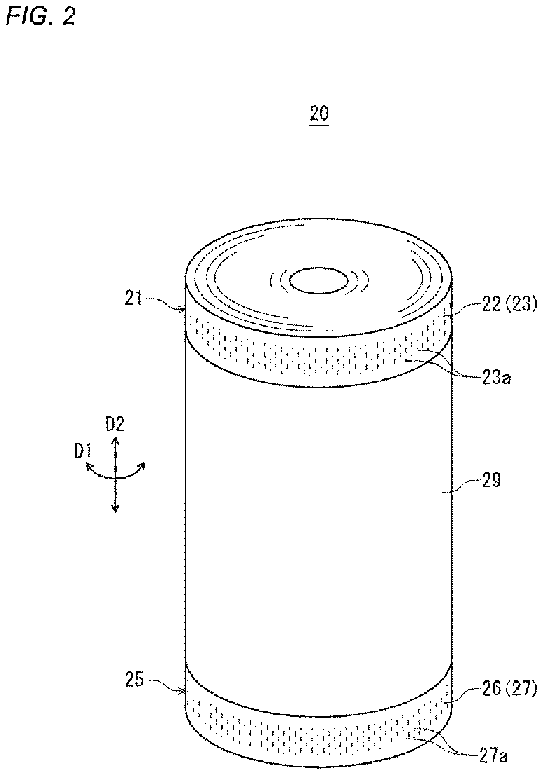

   FIG. 2 is a perspective view of the outer appearance of an electrode group included in the secondary battery according to the first embodiment.
[FIG. 3]

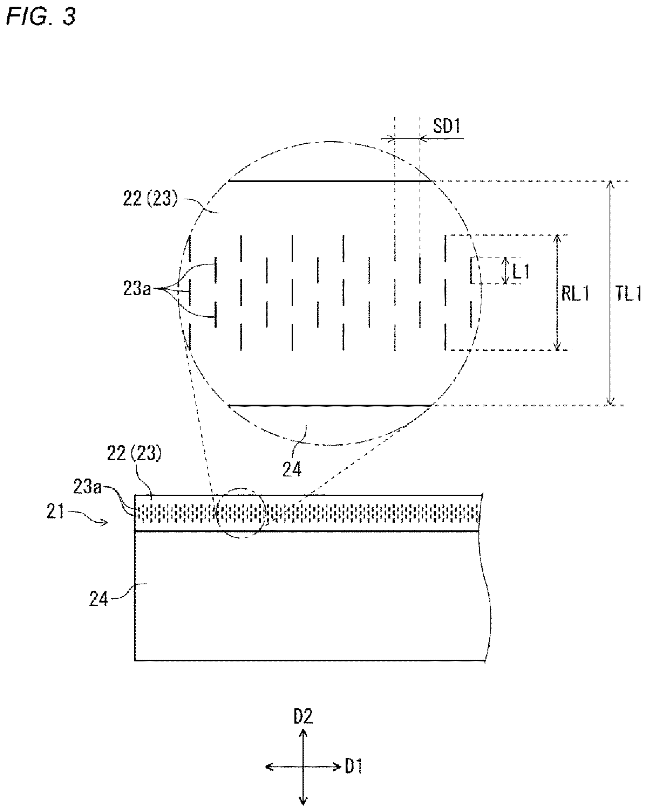

   FIG. 3 is a partial view of a first electrode in the first embodiment in a developed state.
[FIG. 4]

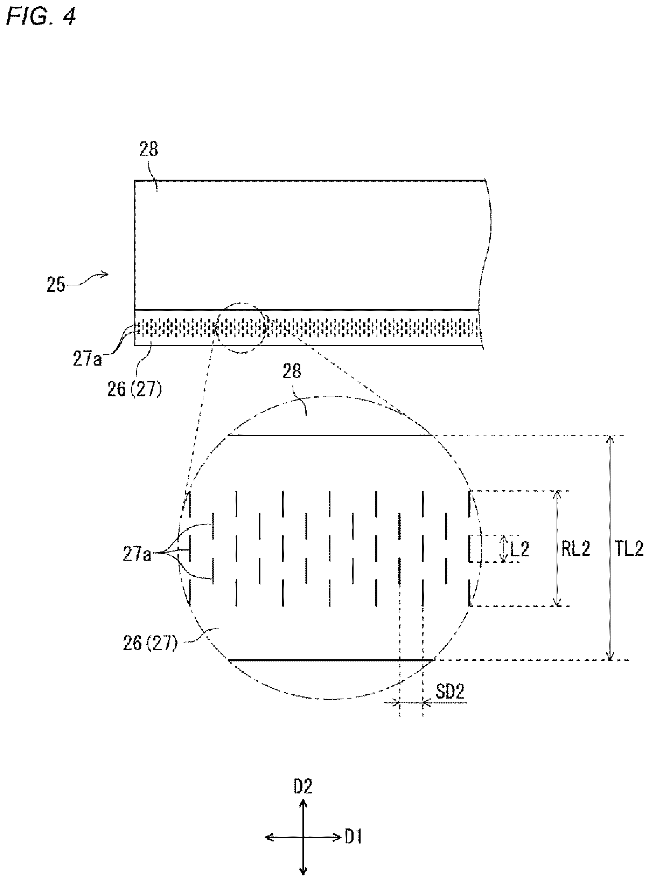

   FIG. 4 is a partial view of a second electrode in the first embodiment in a developed state.
[FIG. 5]

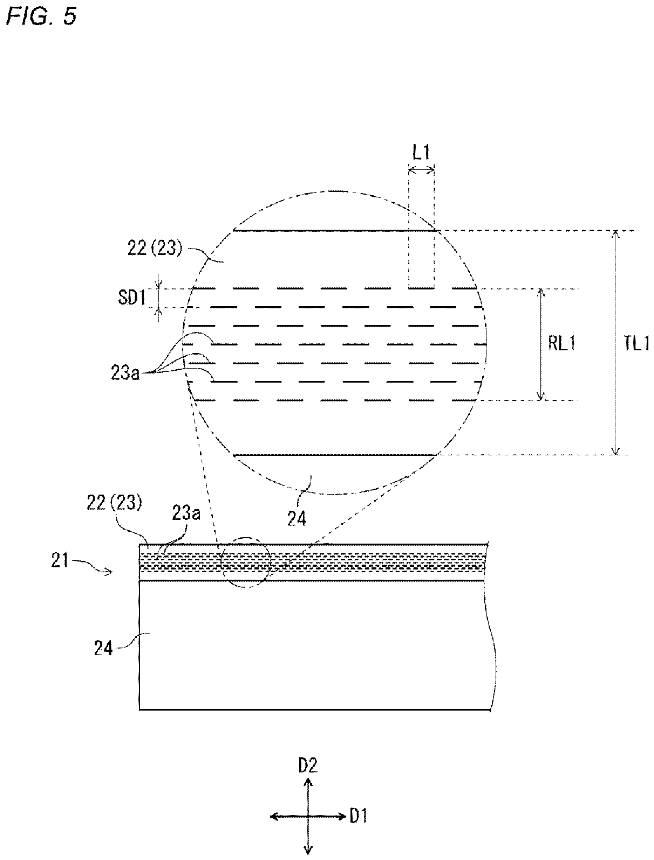

   FIG. 5 is a partial view of a first electrode in a second embodiment in a developed state.
[FIG. 6]

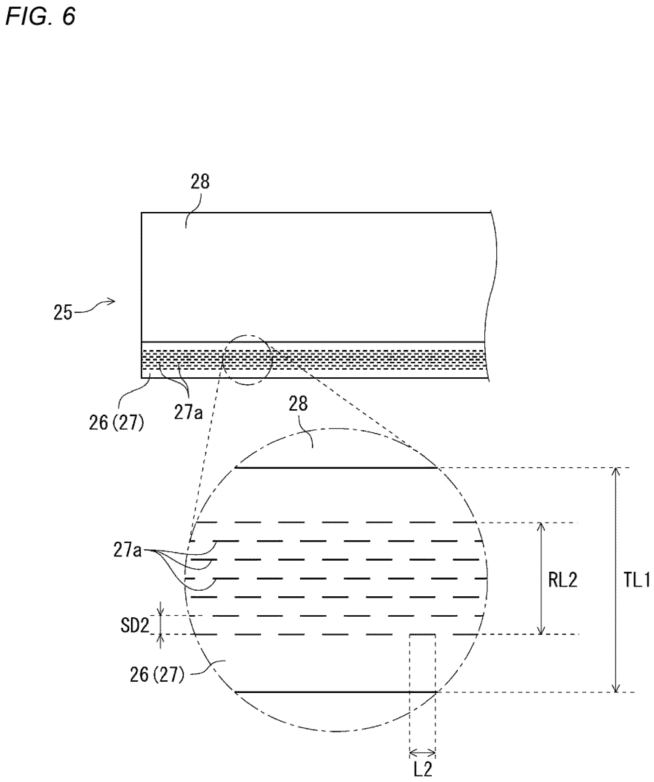

   FIG. 6 is a partial view of a second electrode in the second embodiment in a developed state.

### [Description of Embodiments]

Embodiments of a secondary battery according to the present disclosure are described below by way of examples, but the present disclosure is not limited to the examples described below. **In** the following description, specific numerical values and materials may be exemplified in some cases, but other numerical values and other materials may be adopted as long as the effects of the present disclosure can be obtained.

The secondary battery according to the present disclosure may be a battery that can be repeatedly charged and discharged, and may be a lithium secondary battery (lithium metal secondary battery) or a lithium-ion battery, for example. The secondary battery includes an electrode group of wound-type and a first current collecting member.

The electrode group is configured of a first electrode and a second electrode wound with a separator therebetween. Each of the first electrode and the second electrode have a sheet shape that is long in a first direction. The first electrode is one of a positive electrode and a negative electrode. The second electrode is the other of the positive electrode and the negative electrode. The separator may be configured of a porous sheet having ion permeability and insulating properties. Examples of the porous sheet include a thin film having micropores, a woven fabric, and a nonwoven fabric. The first direction may be a direction matching the winding direction of the electrode group.

The first electrode has a first current collector having a sheet shape that is long in the first direction. The first electrode may further include a first active material layer provided on a surface of the first current collector. The first active material layer may be provided on both surfaces of the first current collector, or may be provided on one of the surfaces of the first current collector. When the first electrode is the positive electrode, the first current collector is a positive electrode current collector (e.g., may be constituted of an aluminum foil or an aluminum alloy foil), and the first active material layer is a positive electrode active material layer (e.g., may contain a lithium-containing transition metal oxide). When the first electrode is the negative electrode, the first current collector may be a negative electrode current collector (e.g., may be constituted of a copper foil or a copper alloy foil), and a negative electrode active material layer (e.g., may contain a carbonaceous material) may be provided as the first active material layer.

The first current collector includes a first exposed portion located at one end thereof in a second direction perpendicular to the first direction. The first exposed portion may be an area in which the first active material layer is not provided. The first exposed portion may be a band-shaped area extending in the first direction. The second direction may be a direction matching the axial direction of the electrode group.

The first current collecting member is connected to the first exposed portion to be conductive to the first current collector. When the first electrode is a positive electrode, the first current collecting member is a positive electrode current collecting member (e.g., may be constituted of stainless steel, titanium, a titanium alloy, aluminum, or an aluminum alloy). When the first electrode is a negative electrode, the first current collecting member is a negative electrode current collecting member (e.g., may be constituted of nickel, a nickel alloy, copper, or a copper alloy). The first current collecting member may be formed in a plate shape as a whole. The first current collecting member and the first exposed portion may be connected to each other by welding (e.g., laser welding).

A plurality of first slits are formed in an area of the first exposed portion located between the opposite ends in the second direction. In a manner similarly to the mechanism described above regarding the secondary battery of Patent Literature 1, stress is generated in the joint between the first current collecting member and the first exposed portion accompanied by charging and discharging of the secondary battery. However, the stress can be reduced by opening and closing the plurality of first slits. While on the contrary, no first slit is formed in the opposite ends of the first exposed portion in the second direction. Since one of the opposite ends is an area connected to the first current collecting member with no first slits formed, easy and highly accurate connection therebetween can be achieved. The other of the opposite ends is an area located in the vicinity of the first active material layer if the first active material layer is provided or in the vicinity of lithium metal deposited in the metal secondary battery. Thus, formation of the first slits can avoid degradation of the characteristics of the secondary battery.

The plurality of first slits may extend in the second direction. The plurality of first slits extending in the second direction can effectively absorb stress generated by expansion and contraction of the electrode group. Note that the first slits extending in the second direction includes not only a case where the extending direction of the first slits matches the second direction but also a case where the directions intersect at an angle of 5° or less.

The plurality of first slits may extend in the first direction. The plurality of first slits extending in the first direction can effectively absorb stress generated by expansion and contraction of the electrode group, and can also effectively absorb stress generated by vibration of the secondary battery. Note that the first slits extending in the first direction includes not only a case where the extending direction of the first slits matches the first direction, but also a case where the directions intersect at an angle of 5° or less.

The plurality of first slits may extend in neither the first direction nor the second direction. For example, the angle between the plurality of first slits and the first direction or the second direction may be 30° or more and 60° or less. In this case, both an effect achieved by providing the first slits extending in the first direction and an effect achieved by providing the first slits extending in the second direction can be exhibited in good balance.

With respect to the first direction, the length of the area in which the plurality of first slits are formed may be 70% or more of the total length of the first exposed portion. This can further reduce stress generated by charging and discharging. In the present description, an area in which a plurality of first slits are formed with respect to a specific direction refers to, for example, an area from a first slit located closest to one end to a first slit located closest to the other end with respect to the specific direction. However, the area in which the plurality of first slits are formed may be divided into a plurality of areas.

Some of the plurality of first slits and some other of the plurality of first slits may be arranged offset from each other in the second direction. In other words, the positions (center positions) of some of the first slits and the positions (center positions) of some other of the first slits may be different from each other with respect to the second direction. This arrangement can further reduce stress generated by charging and discharging.

The plurality of first slits may be arranged in a staggered manner. This arrangement can further reduce stress generated by charging and discharging.

With respect to the second direction, the length of the area in which the plurality of first slits are formed may be 10% or more and 70% or less of the total length of the first exposed portion. When the rate is 10% or more, stress generated during charging and discharging can be sufficiently reduced. When the rate is 70% or less, the strength of the first exposed portion can be sufficiently maintained, and further easy and accurate connection to the first current collecting member can be achieved. Preferably, the length of the area may be 20% or more and 30% or less of the total length of the first exposed portion with respect to the second direction.

The shortest distance between mutually adjacent first slits may be 10% or more and 50% or less of the length of the first slits. When the rate is 10% or more, a portion between the mutually adjacent slits can be inhibited from breaking due to stress generated during charging and discharging. When the rate is 50% or less, the plurality of first slits can be formed at a high density, and stress during charging and discharging can be further reduced. The shortest distance between the mutually adjacent first slits may be a distance therebetween in a direction perpendicular to the direction in which the first slits extend.

The secondary battery may be configured such that the first exposed portion expands and contracts in either or both the first direction and the second direction as the plurality of first slits open and close due to stress generated in the electrode group. Such an expansion and contraction mechanism can sufficiently reduce stress generated during charging and discharging.

The first slits may not be formed in an area of the first current collector other than the first exposed portion. In this case, overall strength of the first current collector can be maintained high, and the first current collector can be kept from tearing.

According to the present disclosure, stress can be reduced that is generated in the joint between the first current collecting member and the first exposed portion during charging and discharging of the secondary battery as described above.

Hereinafter, an example of the secondary battery according to the present disclosure will be specifically described with reference to the drawings. The above-described elements of configuration are adoptable to the elements of configuration of the example secondary battery described below. The elements of configuration of the example secondary battery described below can be altered based on the above description. Further, the matters described below may be adopted to the above-described embodiment. Among the elements of configuration of the example secondary battery described below, any element of configuration that is not essential to the secondary battery according to the present disclosure may be omitted. It should be noted that the drawings indicated below are schematic and do not accurately reflect the shape or number of actual members.

### <<First Embodiment>>

The following describes a first embodiment of the present disclosure. A secondary battery 10 of the present embodiment is configured as a lithium secondary battery. As illustrated in FIGS. 1 to 4, the secondary battery 10 includes an electrode group 20 of wound type, a first current collecting member 31, a second current collecting member 32, a case 40, and a sealing plate 51.

The electrode group 20 is configured of a first electrode 21 and a second electrode 25 wound with a separator 29 therebetween. The first electrode 21, the second electrode 25, and the separator 29 each have a sheet shape that is long in a first direction D1. In the present embodiment, the first electrode 21 is a positive electrode and the second electrode 25 is a negative electrode, but the present invention is not limited thereto. As illustrated in FIG. 2, the separator 29 is exposed around the outermost peripheral part of the electrode group 20, but the present disclosure is not limited thereto. For example, a first current collector 22 or a second current collector 26, which will be described later, may be exposed around the outermost peripheral part of the electrode group 20.

The first electrode 21 includes a first current collector 22 having a sheet shape that is long in the first directional D1, and a first active material layer 24 provided on a surface of the first current collector 22. In the present embodiment, the first active material layer 24 is provided on both surfaces of the first current collector 22, but the present disclosure is not limited thereto. The first current collector 22 is constituted of an aluminum foil or an aluminum alloy foil, for example.

The first current collector 22 includes a first exposed portion 23 that is located at one end (upper end in FIG. 1) thereof in a second direction D2 perpendicular to the first direction D1 and that is not provided with the first active material layer 24. The first exposed portion 23 is a band-shaped area extending in the first directional D1.

The second electrode 25 includes a second current collector 26 having a sheet shape that is long in the first directional D1. In the present embodiment, the second electrode 25 further includes a second active material layer 28 provided on a surface of the second current collector 26, but the present disclosure is not limited thereto. The second current collector 26 is constituted of a copper foil or a copper alloy foil, for example.

The second current collector 26 includes a second exposed portion 27 that is located at the other end (lower end in FIG. 1) thereof in the second directional D2 and that is not provided with the second active material layer 28. The second exposed portion 27 is a band-shaped area extending in the first directional D1.

The first current collecting member 31 is connected to the first exposed portion 23 by welding to be conductive to the first current collector 22. The first current collecting member 31 is constituted of aluminum or an aluminum alloy, for example. The first current collecting member 31 is formed in a plate shape as a whole.

The second current collecting member 32 is connected to the second exposed portion 27 by welding to be conductive to the second current collector 26. The second current collecting member 32 is constituted of copper or a copper alloy, for example. The second current collecting member 32 is formed in a plate shape as a whole.

The case 40 is constituted of a metal and formed in a bottomed cylindrical shape having an opening at one end (upper end in FIG. 1). A welding member 41 is provided on the inner bottom surface of the case 40, and the second current collecting member 32 is welded to the welding member 41. In the above configuration, the case 40 of the present embodiment functions as an external negative electrode terminal.

The sealing plate 51 seals the opening of the case 40. A gasket 52 is disposed at the periphery of the sealing plate 51. The inside of the case 40 is sealed by caulking the open end of the case 40 against the gasket 52. The sealing plate 51 is electrically connected to the first current collecting member 31 via a metal tab 53. In the above configuration, the sealing plate 51 of the present embodiment functions as an external positive electrode terminal.

As illustrated in FIG. 3, the plurality of first slits 23a extending in the second direction D2 are formed in an area of the first exposed portion 23 located between the opposite ends thereof in the second direction D2. The secondary battery 10 is configured such that the first exposed portion 23 expands and contracts in either or both the first direction D1 and the second direction D2 as the plurality of first slits 23a open and close due to stress generated in the electrode group 20 during, for example, charging and discharging. On the other hand, the first slits 23a are not formed at the opposite ends of the first exposed portion 23 in the second directional D2. With respect to the first directional D1, the length of the area in which the plurality of first slits 23a are formed is 70% or more, preferably 80% or more, and more preferably 90% or more of the total length of the first exposed portion 23.

Some of the plurality of first slits 23a and some other of the plurality of first slits 23a are arranged offset from each other in the second directional D2. More specifically, the plurality of first slits are arranged in a staggered manner. However, the arrangement of the plurality of first slits 23a is not limited to this.

With respect to the second directional D2, a length RL1 of the area in which the plurality of first slits 23a are formed is 10% or more and 70% or less of a total length TL1 of the first exposed portion 23, preferably 10% or more and 40% or less of the total length TL1, and more preferably 20% or more and 30% or less of the total length TL1. Further, a shortest distance SD1 between mutually adjacent first slits 23a is 10% or more and 50% or less of a length L1 of the first slits 23a. The length L1 of the first slits 23a is 1 mm ore more and 5 mm or less, for example.

Preferably, the first slits 23a are not formed in an area of the first current collector 22 in which the first active material layer 24 is provided.

As illustrated in FIG. 4, a plurality of second slits 27a extending in the second direction D2 are formed in an area of the second exposed portion 27 located between the opposite ends thereof in the second direction D2. The secondary battery 10 is configured such that the second exposed portion 27 expands and contracts in either or both the first direction D1 and the second direction D2 as the plurality of second slits 27a open and closes due to stress generated in the electrode group 20 during, for example, charging and discharging. On the other hand, no second slits 27a are formed at the opposite ends of the second exposed portion 27 in the second directional D2. The plurality of second slits 27a are formed in 70% or more of the second exposed portions 27 in the first directional D1, preferably 80% or more, and more preferably 90% or more.

Some of the plurality of second slit 27a and some other of the plurality of second slits 27a are arranged offset from each other in the second direction D2. More specifically, the plurality of second slits are arranged in a staggered manner. However, the arrangement of the plurality of second slits 27a is not limited to this.

With respect to the second directional D2, a length RL2 of the area in which the plurality of second slit 27a are formed is 10% or more and 70% or less of a total length TL2 of the second exposed portion 27, preferably 10% or more and 40% or less of the total length TL2, and more preferably 20% or more and 30% or less of the total length TL2. Further, a shortest length SD2 between mutually adjacent second slits 27a is 10% or more and 50% or less of a length L2 of the second slits 27a. The length L2 of the second slits 27a is 1 mm or more and 5 mm or less, for example.

Preferably, the second slits 27a are not formed in an area of the second current collector 26 in which the second active material layer 28 is provided.

### <<Second Embodiment>>

The following describes a second embodiment the present disclosure. The orientations of the first slits 23a and the second slits 27a in the secondary battery 10 of the present embodiment differ from those in the first embodiment. Hereinafter, differences from the first embodiment will be mainly described.

As illustrated in FIGS. 5 and 6, a plurality of first slits 23a and a plurality of second slits 27a each extend in the first directional D1. Although not illustrated, the orientation of the plurality of first slits 23a and the orientation of the plurality of second slits 27a may be different from each other.

### <Supplemental Remarks>

According to the above description of the embodiment, the following techniques are disclosed.

### (Technique 1)

A secondary battery including:
an electrode group of wound type configured of a first electrode and a second electrode wound with a separator therebetween, each of the first electrode and the second electrode having a sheet shape that is long in a first direction, wherein
the first electrode includes a first current collector having a sheet shape that is long in the first direction,
the first current collector includes a first exposed portion located at one end thereof in a second direction perpendicular to the first direction,
the secondary battery further includes a first current collecting member connected to the first exposed portion to be conductive to the first current collector;
a plurality of first slits are formed in an area of the first exposed portion located between opposite ends thereof in the second direction, and
the first slits are not formed at the opposite ends of the first exposed portion in the second direction.

### (Technique 2)

The secondary battery according to Technique 1, wherein the plurality of first slits extend in the second direction.

### (Technique 3)

The secondary battery according to Technique 1, wherein the plurality of first slits extend in the first direction.

### (Technique 4)

The secondary battery according to any one of Techniques 1 to 3, wherein with respect to the first direction, a length of an area in which the plurality of first slits are formed is 70% or more of a total length of the first exposed portion.

### (Technique 5)

The secondary battery according to any one of Techniques 1 to 4, wherein some of the plurality of first slits and some other of the plurality of first slits are arranged offset from each other in the second direction.

### (Technique 6)

The secondary battery according to any one of Techniques 1 to 5, wherein the plurality of first slits are arranged in a staggered manner.

### (Technique 7)

The secondary battery according to any one of Techniques 1 to 6, wherein with respect to the second direction, a length of an area in which the plurality of first slits are formed is 10% or more and 70% or less of a total length of the first exposed portion.

### (Technique 8)

The secondary battery according to any one of Techniques 1 to 7, wherein a shortest distance between mutually adjacent first slits of the plurality of first slits is 10% or more and 50% or less of a length of the first slits.

### (Technique 9)

The secondary battery according to any one of Techniques 1 to 8, wherein the first exposed portion expands and contracts in either or both the first direction and the second direction as the plurality of first slits open and close due to stress generated in the electrode group.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial applicability]

The present disclosure is applicable to a secondary battery.

### [Reference Signs List]

10: Secondary battery
   20: Electrode group
      21: First electrode
         22: First current collector
            23: First exposed portion
            23a: First slit
         24: First active material layer
      25: Second electrode
         26: Second current collector
            27: Second exposed portion
            27a: Second slit
         28: Second active material layer
      29: Separator
   31: First current collecting member
   32: Second current collecting member
   40: Case
   41: Welding member
   51: Sealing plate
   52: Gasket
   53: Metal tab
D1: First direction
D2: Second direction
L 1: Length of first slit
L2: Length of second slit
RL1: Length of area in which first slits are formed
RL2: Length of area in which second slits are formed
SD1: Shortest distance between mutually adjacent first slits
SD2: Shortest distance between mutually adjacent second slits
TL1: Total length of first exposed portion
TL2: Total length of second exposed portion

## Claims

1. A secondary battery comprising:
an electrode group of wound type configured of a first electrode and a second electrode wound with a separator therebetween, each of the first electrode and the second electrode having a sheet shape that is long in a first direction, wherein
the first electrode includes a first current collector having a sheet shape that is long in the first direction,
the first current collector includes a first exposed portion located at one end thereof in a second direction perpendicular to the first direction,
the secondary battery further comprises a first current collecting member connected to the first exposed portion to be conductive to the first current collector,
a plurality of first slits are formed in an area of the first exposed portion located between opposite ends thereof in the second direction, and
the first slits are not formed at the opposite ends of the first exposed portion in the second direction.

2. The secondary battery according to claim 1, wherein
the plurality of first slits extend in the second direction.

3. The secondary battery according to claim 1, wherein
the plurality of first slits extend in the first direction.

4. The secondary battery according to any one of claims 1 to 3, wherein
with respect to the first direction, a length of an area in which the plurality of first slits are formed is 70% or more of a total length of the first exposed portion.

5. The secondary battery according to any one of claims 1 to 3, wherein
some of the plurality of first slits and some other of the plurality of first slits are arranged offset from each other in the second direction.

6. The secondary battery according to any one of claims 1 to 3, wherein
the plurality of first slits are arranged in a staggered manner.

7. The secondary battery according to any one of claims 1 to 3, wherein
with respect to the second direction, a length of an area in which the plurality of first slits are formed is 10% or more and 70% or less of a total length of the first exposed portion.

8. The secondary battery according to any one of claims 1 to 3, wherein
a shortest distance between mutually adjacent first slits of the plurality of first slits is 10% or more and 50% or less of a length of the first slits.

9. The secondary battery according to any one of claims 1 to 3, wherein
the first exposed portion expands and contracts in either or both the first direction and the second direction as the plurality of first slits open and close due to stress generated in the electrode group.
